# DEMANDE DE BREVET EUROPEEN

(11) **EP 0 838 294 A1**
(43) Date de publication de la demande: **29.04.1998**
(21) Numéro de dépôt: 97402467.1
(22) Date de dépôt: 20.10.1997
(51) Int. Cl.: B23D 15/14, B23D 17/06

(54) **Dispositif d'actionnement**

(30) Priorité: 23.10.1996 FR 9612884
(71) Demandeur: Dorguin, Jean-Pierre, F-08430 Mondigny (FR)
(72) Inventeur: Dorguin, Jean-Pierre, F-08430 Mondigny (FR)
(74) Mandataire: Kaspar, Jean-Georges

(57) **Abrégé**

Dans un dispositif d'actionnement, deux organes d'actionnement 1 et 2 à double effet sont attelés l'un à l'autre par une liaison mécanique 3. Un circuit d'alimentation C des organes d'actionnement 1 et 2 est agencé pour alimenter un seul organe d'actionnement 1 avec un débit maximal dans un premier régime dit de déplacement rapide et d'effort faible et pour alimenter simultanément plusieurs organes d'actionnement 1 et 2 dans un deuxième régime dit de déplacement de travail et d'effort important, selon un fonctionnement automatique et réversible.

Application notamment à l'actionnement de cisaille à béton.

## Description

L'invention est relative à un dispositif d'actionnement, notamment pour cisaille à béton.

L'invention est également applicable à d'autres machines exerçant des efforts importants et ayant besoin d'une vitesse rapide pour l'approche et d'une vitesse plus lente pendant le travail nécessitant un effort important.

Le document US 5 335 499 décrit une boucle hydraulique ayant un premier et un second vérin hydraulique en communication avec une source d'énergie pour déplacer une charge avec un fluide hydraulique dans un premier régime dit de déplacement rapide et d'effort faible et dans un deuxième régime dit de déplacement de travail et d'effort important.

Dans la présente description, l'expression "petite chambre" désigne une chambre de vérin contenant une tige de vérin et l'expression "grande chambre" désigne une chambre de vérin ne contenant pas de tige de vérin, conformément à la pratique courante pour l'homme du métier.

Un but de l'invention est de fournir un dispositif procurant un déplacement rapide des organes d'actionnement sous un faible effort et un déplacement normal de ces organes d'actionnement lorsqu'ils sont soumis à une forte charge.

Un autre but de l'invention est d'assurer automatiquement le graissage de la machine en utilisant une source d'énergie commune à un moyen de graissage et aux organes d'actionnement.

L'invention a pour objet un dispositif d'actionnement, notamment pour cisaille à béton, du type comportant au moins deux vérins d'actionnement à double effet attelés l'un à l'autre et un circuit d'alimentation en fluide desdits vérins d'actionnement agencé pour alimenter un seul vérin d'actionnement avec un débit maximal dans un premier régime dit de déplacement rapide et d'effort faible et pour alimenter simultanément plusieurs vérins d'actionnement dans un deuxième régime dit de déplacement de travail et d'effort important, le circuit d'alimentation en fluide étant agencé pour alimenter les grandes chambres des vérins à une pression élevée pour assurer la sortie des tiges des vérins dans un déplacement de travail et d'effort important et pour que la grande chambre d'un vérin alimente la petite chambre d'un autre vérin dans un déplacement rapide et d'effort faible correspondant à une rentrée rapide des tiges des vérins, caractérisé en ce que le circuit d'alimentation en fluide est agencé pour que le fluide expulsé des petites chambres des vérins soit recyclé dans une grande chambre d'un vérin pour assurer la sortie rapide des tiges des vérins dans un déplacement rapide et d'effort faible et pour que les petites chambres soient mises sous pression simultanément lors de la rentrée des tiges des vérins soumis à une forte charge, dans un déplacement de travail et d'effort important.

Selon d'autres caractéristiques de l'invention :
- le dispositif comporte en outre un moyen de graissage centralisé déclenché automatiquement à chaque cycle d'actionnement par un organe d'actionnement à simple effet alimenté par ledit circuit d'alimentation,
- ledit moyen de graissage centralisé comporte un récipient de graisse maintenue sous pression associé à un moyen de clapet anti-retour de manière à produire l'aspiration d'un volume de graisse sensiblement reproductible lors d'un premier déplacement dudit organe d'actionnement à simple effet et à injecter un volume de graisse aspirée dans un répartiteur lors d'un deuxième déplacement opposé audit premier déplacement dudit organe d'actionnement à simple effet,
- l'amplitude des déplacements dudit organe d'actionnement à simple effet est réglable,
- l'organe d'actionnement à simple effet du moyen de graissage centralisé est mis en pression par ledit circuit d'alimentation au cours du deuxième régime dit de déplacement de travail et d'effort important,
- l'organe d'actionnement à simple effet comporte un moyen élastique précontraint à une valeur prédéterminée, de manière à éjecter la graisse vers un répartiteur lors de la mise en pression du moyen de graissage et à aspirer la graisse dans un réservoir au cours du premier régime dit de déplacement rapide et d'effort faible,
- chaque vérin d'actionnement est un vérin hydraulique et le circuit d'alimentation est un circuit hydraulique,
- chaque vérin d'actionnement est un vérin pneumatique et le circuit d'alimentation est un circuit pneumatique.

L'invention sera mieux comprise grâce à la description qui va suivre donnée à titre d'exemple non limitatif en référence aux dessins annexés dans lesquels :

la Figure 1 représente schématiquement un premier mode de réalisation de l'invention dans un premier régime de fonctionnement sous faible charge correspondant à une sortie rapide des tiges de vérins.

La Figure 2 représente schématiquement le dispositif de la Figure 1 dans un deuxième régime de fonctionnement sous forte charge correspondant à une sortie lente des tiges des vérins.

La Figure 3 représente schématiquement le dispositif des Figures 1 et 2 dans un premier régime de fonctionnement sous faible charge correspondant à une rentrée rapide des tiges des vérins.

La Figure 4 représente schématiquement le dispositif des Figures 1 à 3 dans un deuxième régime de fonctionnement sous forte charge correspondant à une rentrée lente des tiges des vérins.

La Figure 5 représente schématiquement un moyen de graissage centralisé faisant partie d'un dispositif selon l'invention.

La Figure 6 représente schématiquement en coupe longitudinale un mode de réalisation d'un moyen de graissage centralisé analogue à celui de la Figure 5.

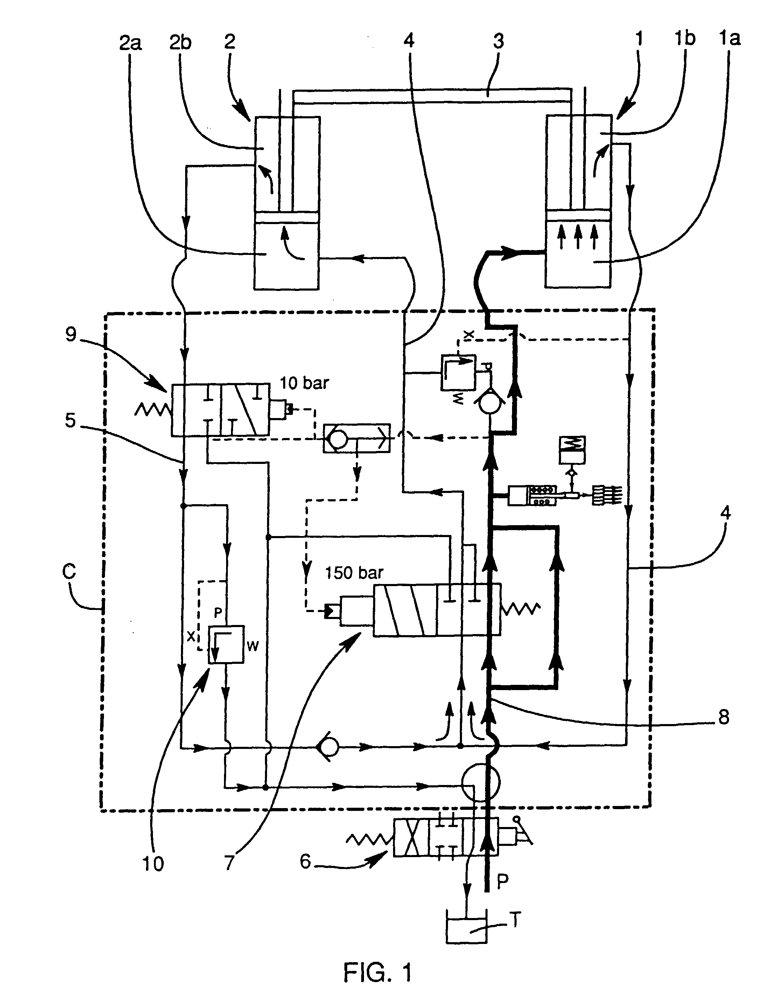

En référence aux Figures 1 à 4, les chiffres de référence identiques désignent des éléments identiques ou fonctionnellement équivalents entre eux.

Bien que la description qui suit concerne des moyens d'énergie hydraulique et des vérins hydrauliques associés, l'homme du métier comprendra aisément que l'invention s'étend au cas de moyens d'énergie pneumatique et de vérins pneumatiques associés. L'invention couvre par conséquent des variantes hydrauliques et pneumatiques, l'essentiel étant d'utiliser une pression de fluide pour la transmission de l'énergie et pour l'actionnement des organes correspondants.

Sur la Figure 1, un dispositif d'actionnement notamment pour cisaille à béton, comporte au moins deux vérins hydrauliques 1,2 à double effet attelés l'un à l'autre par une liaison mécanique 3 solidarisant l'une à l'autre les tiges des vérins hydrauliques 1 et 2. Cet attelage par liaison mécanique 3 entraîne par conséquent un déplacement identique des tiges des vérins 1 et 2 et des pistons associés.

Pour assurer la sortie rapide des tiges des vérins 1 et 2, un circuit d'alimentation des vérins 1 et 2 est agencé pour alimenter la grande chambre la du vérin 1 avec un débit maximal correspondant à un premier régime dit de déplacement rapide et d'effort faible. Le déplacement du piston du vérin provoque l'expulsion du fluide hydraulique de la petite chambre 1b qui circule dans le conduit 4 pour être réinjecté dans la grande chambre 2a du vérin 2. Le déplacement du piston du vérin 2 provoque l'expulsion du fluide hydraulique de la petite chambre 2b, le fluide hydraulique étant évacué par le conduit 5 qui rejoint le conduit 4 pour être injecté dans la grande chambre 2a du vérin 2. Si la quantité de fluide provenant de 1a et 1b est trop importante par rapport à la quantité admissible dans la grande chambre 2a, le limiteur de pression 10 évacue le surplus vers le réservoir T après passage dans le distributeur 6.

Le fonctionnement du dispositif est le suivant :

Le distributeur à commande manuelle 6 situé dans la cabine de l'engin est actionné de manière à permettre la mise en pression hydraulique de la grande chambre la du vérin 1 par l'intermédiaire du distributeur 7 piloté par la pression, en position de repos. le fluide hydraulique sous pression alimente ainsi par l'intermédiaire de la conduite 8 avec bipasse la grande chambre la du vérin 1, ce qui provoque un déplacement du piston et l'expulsion du fluide de la petite chambre 1b par la conduite 4, ainsi que l'expulsion du fluide hydraulique de la petite chambre 2b du vérin 2 à travers la conduite 5 sur laquelle est connectée un distributeur 9 piloté par la pression et le recyclage du fluide hydraulique dans la grande chambre 2a du vérin 2. Un clapet 10 piloté par la pression est prévu pour permettre le retour du fluide hydraulique au réservoir T en cas de débit trop important.

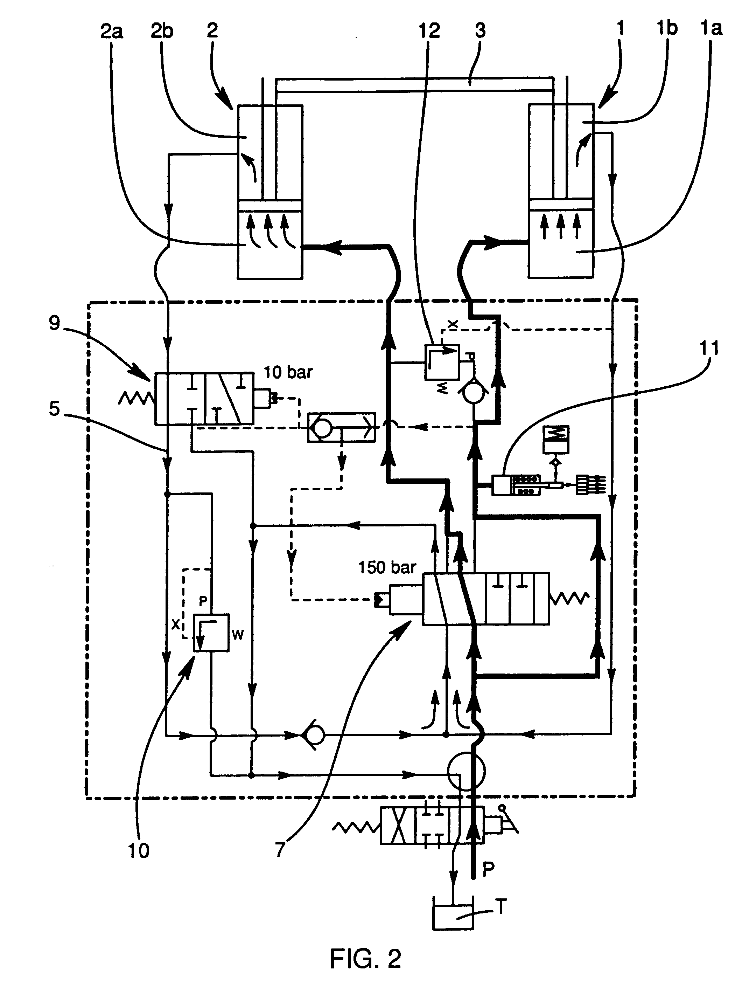

Sur la Figure 2, dans un deuxième régime dit de déplacement de travail et d'effort important, le fluide hydraulique alimente les deux grandes chambres la et 2a des vérins 1 et 2. Cette alimentation simultanée des deux vérins 1 et 2 résulte du pilotage du distributeur 7 par la pression élevée provenant de l'effort résistant imposé par un travail effectué par la machine, par exemple par une cisaille à béton.

L'évacuation des petites chambres 1b et 2b des vérins 1 et 2 se fait directement à travers les distributeurs 7 et 9 en direction du réservoir de fluide hydraulique, tandis qu'un vérin à simple effet 11 est actionné par la pression de travail du circuit hydraulique pour assurer le graissage, comme on le verra plus loin.

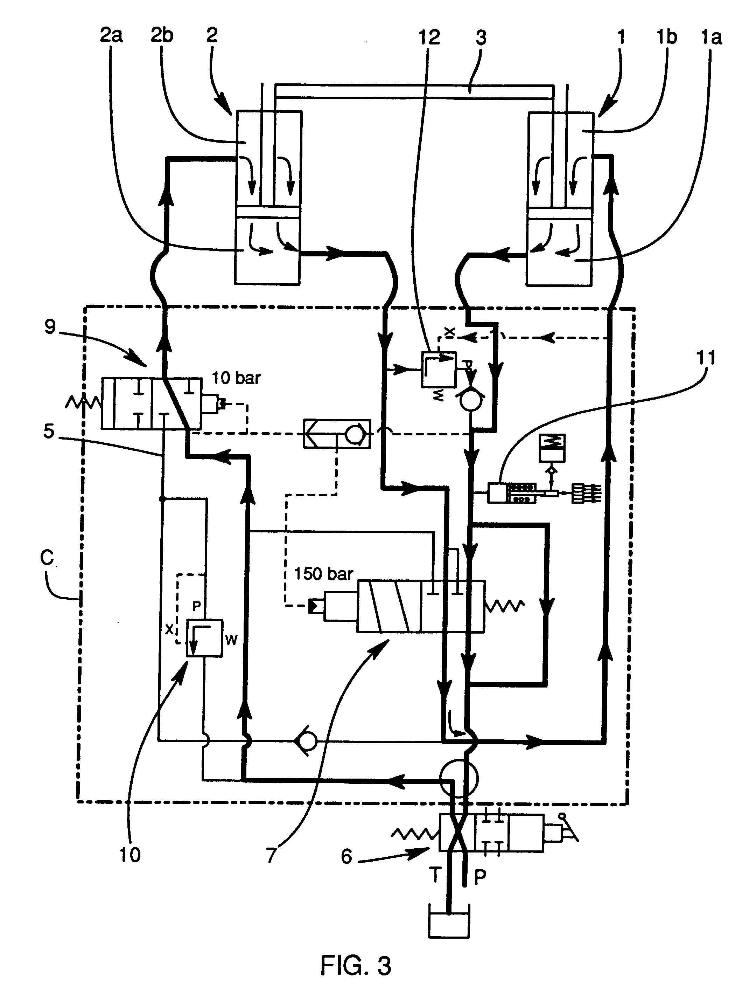

Sur la Figure 3, dans un mode de déplacement rapide et d'effort faible correspondant à une rentrée rapide des tiges des vérins 1 et 2, le distributeur 7 n'est pas piloté par la pression, tandis que le distributeur 9 est piloté par la pression. Ce mode de sélection est obtenu en actionnant le distributeur manuel 6 dans le sens correspondant.

Dans ce mode de premier régime, la petite chambre 2b du vérin 2 est mise sous pression, de manière à provoquer l'expulsion du fluide hydraulique de la grande chambre 2a du vérin 2, à injecter ce fluide hydraulique à travers la conduite de communication avec la petite chambre 1b du vérin 1 et à expulser le fluide hydraulique de la chambre la du vérin 1.

La pression du fluide hydraulique expulsé est faible de sorte que le vérin 11 d'actionnement du système de graissage centralisé est relâché et que l'aspiration de la graisse à travers un clapet anti-retour est permise en vue d'une injection ultérieure à travers le répartiteur de graissage centralisé.

Un clapet 12 limiteur de débit est prévu pour assurer une sécurité en cas de surpression et évacuer partiellement le débit sortant de la grande chambre 2a du vérin 2 directement vers le réservoir T.

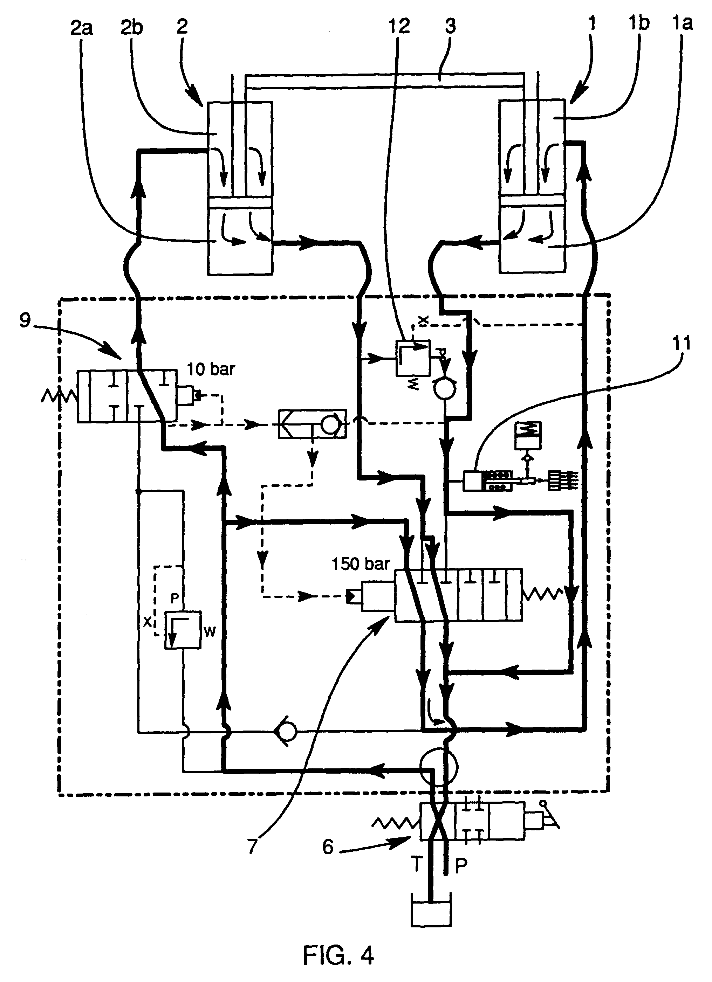

Sur la figure 4, un mode de fonctionnement correspondant à un déplacement de travail et d'effort important est réalisé lors de la rentrée des tiges des vérins 1 et 2 soumis à une forte charge.

Le distributeur manuel 6 actionné par l'opérateur correspond au mode de rentrée des vérins et le distributeur 7 de puissance est piloté par la pression, ainsi que le distributeur 9 permettant l'admission du fluide hydraulique sous pression dans la petite chambre 2b du vérin 2. Les petites chambres 1b et 2b des vérins 1 et 2 sont mises sous pression simultanément et les grandes chambres la et 2a des vérins 1 et 2 sont évacuées simultanément vers le réservoir T, le clapet de sécurité 12 contre les surpressions assurant un équilibrage à l'évacuation.

Ainsi, du fait de la réversibilité du circuit d'alimentation aussi bien lors de la rentrée que de la sortie des tiges des vérins, le passage du premier régime de déplacement rapide et d'effort faible au deuxième régime de déplacement de travail et d'effort important s'effectuent automatiquement, aussi bien dans un sens que dans l'autre.

Le passage du premier régime de déplacement rapide et d'effort faible au deuxième régime de déplacement de travail et d'effort important est piloté automatiquement en fonction de la pression d'actionnement, ce qui permet de constituer un circuit d'alimentation sous forme d'un module hydraulique limité par le contour C, ce module agissant automatiquement lors de l'actionnement du distributeur manuel 6. L'opérateur de la machine constate que le déploiement et la rentrée des tiges des vérins 1 et 2 est plus rapide que dans l'art antérieur et constate simplement un ralentissement lors d'une action de travail nécessitant un effort important. Aucune phase d'apprentissage de l'opérateur n'est par conséquent nécessaire et le branchement des vérins peut s'effectuer automatiquement en raccordant le module c à un dispositif d'actionnement de l'art antérieur, pour le rendre conforme à l'invention.

En particulier, par comparaison à l'état de la technique connu du document US 5 335 499, dans le régime de déplacement rapide et d'effort faible représenté à la figure 1 correspondant à une sortie rapide des tiges des vérins, le débit fourni par la pompe P d'alimentation est destinée uniquement à l'alimentation de la grande chambre la du vérin 1, tandis que les deux petites chambres 1b, 2b assurent l'alimentation de la grande chambre 2a du vérin 2: cette disposition procure un déplacement plus rapide pour la sortie des tiges des vérins.

Egalement, le régime de déplacement rapide et d'effort faible représenté à la figure 3 et correspondant à la rentrée rapide des tiges des vérins sous une faible charge, la pompe B alimente uniquement, une petite chambre 2b d'un vérin 2 : cette disposition procure également une rentrée plus rapide des tiges des vérins 1 et 2 que le dispositif du document US 5 335 499.

Enfin, dans le régime de déplacement de travail et d'effort important représenté sur la figure 4 correspondant à une rentrée lente des tiges des vérins sous une forte charge, les petites chambres 1b, 2b sont alimentées directement par la pompe P, ce qui n'est pas prévu dans le dispositif du document US 5 335 499.

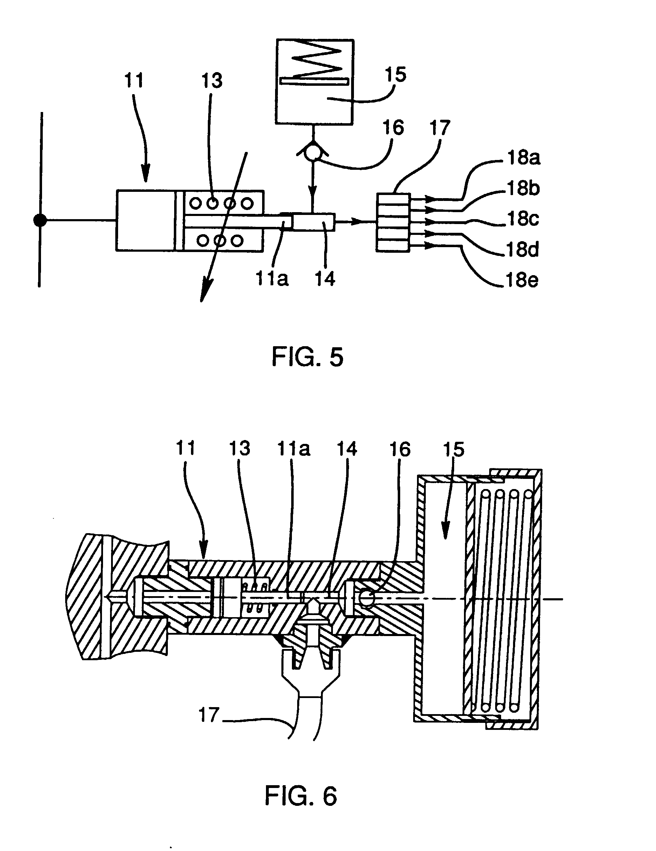

En référence aux Figures 5 et 6, les éléments de repères identiques désignent des éléments identiques on fonctionnellement équivalents entre eux.

Ce système de graissage centralisé comporte un vérin à simple effet 11 avec un piston soumis d'un côté à la pression du circuit hydraulique et de l'autre côté à l'action d'un moyen plastique 13 précontraint à une valeur prédéterminée, par exemple un ressort hélicoïdal 13 précontraint. La tige 11a du vérin 11 joue le rôle d'un piston pénétrant dans une chambre d'aspiration 14 communiquant d'un côté avec une réserve de graisse 15 par l'intermédiaire d'un clapet anti-retour 16 et d'autre part avec un répartiteur 17 en liaison avec des conduites de graissage 18a à 18e reliées à des points de graissage de la machine. Ainsi, le graissage est déclenché à chaque cycle d'actionnement correspondant à un passage d'un régime de fonctionnement à un autre régime de fonctionnement.

En effet, le moyen élastique 13 précontraint est choisi de manière à éjecter la graisse de la chambre 14 vers le répartiteur 17 lors de la mise en pression hydraulique du vérin 11 et à aspirer la graisse dans le réservoir 15 au cours d'un premier régime de déplacement rapide et d'effort faible, dans lequel le moyen élastique 13 repousse le piston du vérin 11 dans le sens correspondant à l'aspiration de la graisse à travers le clapet anti-retour 16.

L'invention couvre également les variantes non représentées dans lesquelles l'amplitude des déplacements de l'organe d'actionnement 11 à simple effet est réglable, où dans 1esquelles la cadence des déplacements de l'organe d'actionnement à simple effet est réglable.

## Revendications

1. Dispositif d'actionnement, notamment pour cisaille à béton, du type comportant au moins deux vérins (1,2) d'actionnement à double effet attelés (13) l'un à l'autre et un circuit d'alimentation en fluide desdits vérins d'actionnement (1,2) agencé pour alimenter un seul vérin d'actionnement (1 ou 2) avec un débit maximal dans un premier régime dit de déplacement rapide et d'effort faible et pour alimenter simultanément plusieurs vérins d'actionnement (1,2) dans un deuxième régime dit de déplacement de travail et d'effort important, le circuit d'alimentation en fluide étant agencé pour alimenter les grandes chambres (1a, 2a) des vérins (1,2) à une pression élevée pour assurer la sortie des tiges des vérins dans un déplacement de travail et d'effort important (figure 2) et pour que la grande chambre (2a) d'un vérin (2) alimente la petite chambre (1b) d'un autre vérin (1) dans un déplacement rapide et d'effort faible correspondant à une rentrée rapide des tiges des vérins (1,2) (figure 3), caractérisé en ce que le circuit d'alimentation en fluide est agencé pour que le fluide expulsé des petites chambres (1b, 2b) des vérins (1,2) soit recyclé dans une grande chambre (2a) d'un vérin (2) pour assurer la sortie rapide des tiges des vérins dans un déplacement rapide et d'effort faible (figure 1) et pour que les petites chambres (1b, 2b) soient mises sous pression simultanément (figure 4) lors de la rentrée des tiges des vérins (1,2) soumis à une forte charge, dans un déplacement de travail et d'effort important.

2. Dispositif selon la revendication 1, caractérisé en ce que le dispositif comporte en ontre un moyen de graissage centralisé (11 ,13-17) déclenché automatiquement à chaque cycle d'actionnement par un organe d'actionnement (11) à simple effet alimenté par ledit circuit d'alimentation.

3. Dispositif selon la revendication 2, caractérisé en ce que ledit moyen de graissage centralisé (11,13-17) comporte un récipient (15) de graisse maintenue sous pression associé à un moyen de clapet anti-retour (16) de manière à produire l'aspiration d'un volume de graisse sensiblement reproductible lors d'un premier déplacement dudit organe d'actionnement (11) à simple effet et à injecter un volume de graisse aspirée dans un répartiteur (17) lors d'un deuxième déplacement opposé audit premier déplacement dudit organe d'actionnement à simple effet.

4. Dispositif selon la revendication 3, caractérisé en ce que l'amplitude des déplacements dudit organe d'actionnement (11) à simple effet est réglable.

5. Dispositif selon la revendication 2, caractérisé en ce que l'organe d'actionnement (11) à simple effet du moyen de graissage centralisé (11,13-17) est mis en pression par ledit circuit d'alimentation au cours du deuxième régime dit de déplacement de travail et d'effort important.

6. Dispositif selon la revendication 5, caractérisé en ce que l'organe d'actionnement à simple effet (11) comporte un moyen élastique (13) précontraint à une valeur prédéterminée, de manière à éjecter la graisse vers un répartiteur (17) lors de la mise en pression du moyen de graissage et à aspirer la graisse dans un réservoir (15) au cours du premier régime dit de déplacement rapide et d'effort faible.

7. Dispositif selon la revendication 1 ou la revendication 2, caractérisé en ce que chaque vérin d'actionnement (1,2,11) est un vérin hydraulique et en ce que le circuit d'alimentation est un circuit hydraulique.

8. Dispositif selon la revendication 1 ou la revendication 2, caractérisé en ce que chaque vérin d'actionnement est un vérin pneumatique et en ce que le circuit d'alimentation est un circuit pneumatique.
